Europäisches Patentamt

European Patent Office

Office européen des brevets

(19)

(11) Publication number: **0 018 122**
**B1**

(12) **EUROPEAN PATENT SPECIFICATION**

(45) Date of publication of patent specification: **13.11.85**

(51) Int. Cl.⁴: **B 60 R 22/28**

(21) Application number: **80301011.5**

(22) Date of filing: **31.03.80**

(54) Strop securing means.

(30) Priority: **03.04.79 GB 7911680**

(43) Date of publication of application:
**29.10.80 Bulletin 80/22**

(45) Publication of the grant of the patent:
**13.11.85 Bulletin 85/46**

(84) Designated Contracting States:
**DE FR GB IT SE**

(56) References cited:
**DE-A-1 480 245**
**DE-A-2 241 326**
**DE-A-2 355 358**
**DE-A-2 414 952**
**DE-A-2 600 613**
**DE-B-2 348 654**
**DE-B-2 355 944**
**DE-B-2 401 703**
**DE-U-7 807 850**
**FR-A-2 188 451**
**FR-A-2 226 840**
**GB-A-1 069 401**
**US-A-3 588 173**
**US-A-3 692 253**

Patents Abstracts of Japan, Vol. 1, No. 65,
24 June 1977, page 900M77

(73) Proprietor: **The Secretary of State for Transport in Her Britannic Majesty's Government of the United Kingdom of Great Britain and Northern Ireland 2 Marsham Street London SW1P 3EP (GB)**

(72) Inventor: **Cardew, Kenneth Hugh Frederic 33, Holly Road Cove Farnborough Hants (GB)**

(74) Representative: **Beckham, Robert William et al Procurement Executive Ministry of Defence Patents 1A(4), Room 2014 Empress State Building Lillie Road London SW6 1TR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to strop securing means which may be used for inhibiting undesirable movement of a load restrained by a strop.

In the event of an impact to a vehicle, there may be appreciable movement of a load due to the taking up of slack in, or extension of, a strop used to restrain the load. In particular, in a safety harness as used in motor vehicles there is usually an appreciable length of webbing between an anchorage and the point of engagement with the wearer's body, and additionally an inertia reel, as commonly used, includes extra webbing to permit normal forward movement by the wearer. When impact occurs, the combined movement due to strop extension and the tightening of coils on an inertia reel can be sufficient to permit contact with parts of vehicle structure.

Devices intended to reduce movement of a strop during an impact are known. Typically the known devices, such as those disclosed in US patent 3588173, UK patent 1069401 and Japanese patent 5213222, include a roller located in a fixed housing and a roller location and displacement arrangement which serves to locate the roller in the housing and to displace it during an impact so as to press the strop between the roller and a part of the housing and thereby preventing further movement of the strop. The rollers are held in this position by means of locking arrangements such as for example latches which engage the axle of the roller, as disclosed in US patent 3588173 or for example by means of axially extending grooves in the roller which engage a fixed bar as disclosed in UK patent 1069401. Typically that part of the housing against which the strop is pressed by the roller is a fixed bar. The location and displacement arrangements of the known devices are typically springs which act radially on the ends of the roller as for example in US patent 3588173 or for example a lever and spring arrangement as in UK patent 1069401.

However the known devices are not as effective as would be desired and tend to suffer from disadvantages in that either they do not sufficiently arrest movement of the strop to be effective or are liable to cause the strop to break due to excessive loading on the trapped part of the strop.

The present invention is directed to the provision of securing means at an intermediate point on a strop whereby undesirable movement of the strop during an impact is greatly reduced and the disadvantages associated with the known devices are minimised.

According to the present invention there is provided a strop securing means which includes:
a fixed housing;
a roller contained within the housing;
a location and displacement arrangement arranged for
(i) locating the roller in the housing in a first position in which the roller is free to rotate and the strop can pass freely over the roller; and
(ii) allowing the roller to be displaced to a second position by the action of the strop against the roller when the strop is subject to a tension thereby causing the strop in the second position to be pressed between the roller and a part of the housing;

characterised in that the roller is hollow and is supported within the housing by two pairs of co-operating surfaces each pair comprising at least one surface co-axial with the roller and at least one surface of each pair being a chamfer, said surfaces being maintained in engagement when the roller is in the first position by spring loading, and has openings at the ends of its wall and the housing has integral projections extending into the ends of the roller and adapted to interlock with the openings in the roller to secure the roller against rotation in the second position thereby causing the strop to be trapped between the roller and a part of the housing.

The location and displacement arrangement is such as to secure the roller in the first position until the tension in the strop reaches a pre-determined finite tension level.

The location and displacement arrangement may comprise bushes urged apart by a spring which when the strop is in a first condition, in which the tension is below the said level, is in a non-compressed state, and has the roller coaxially mounted on the bushes the ends of the bushes serving to locate the roller relative to the housing in the said first position and which spring, with the strop in a second condition, in which the tension reaches the said level, is in a compressed state by the action of the strop on the bushes through the roller compressing the spring, the bushes in this state being moved together thereby releasing the roller to allow it to be displaced from the first position to the second position.

Preferably the strop passes round at least 50% of the circumference of the roller. That part of the housing against which the strop is pressed by the roller when the roller is in the second position is preferably the strop guiding means.

The bushes may be two flanged bushes, the bushes and spring being carried on a spindle which is fixed to the housing, the roller being hollow and coaxial with the bushes when the roller is in the first position. The flanges of the bushes cooperate with flat washers located in the hollow region of the roller the apertures of which washers are chamfered on their respective inner surfaces and the flanges of the bushes are chamfered, the two sets of chamfers co-operating to maintain the roller coaxial with the spindle when the roller is in the first position and the pre-determined finite tension level acting through the chambers to release the roller from the first position when the pre-determined finite tension level is reached thereby releasing the roller from the first position.

Alternatively the bushes may be provided with pintles, the roller being coaxial with the bushes, the pintles acting against slots in the housing to maintain the roller in the first position, until the pre-determined finite tension level is reached, the pintles being disengageable from their slots in the housing when the pre-determined finite tension level is reached so that the roller may be released from the first position. The pintles may be chamfered.

The projections on the housing for interlocking with openings at the ends of the wall of the roller to secure the roller in the second position may comprise a boss integral with the housing, the boss having a lobe shaped to enter an opening in the end of the roller.

Alternatively the projection may comprise a claw member integral with the housing.

In order to increase friction between the roller and the strop when the strop is being passed between the roller and the housing, the surface of the roller may be roughened.

Embodiments of the invention will now be described by way of example with reference to the accompanying drawings of which:

Fig. 1 is a side elevation of a strop securing mechanism according to the invention,

Fig. 2 is a cross-section of the mechanism of Fig. 1 taken on the line II—II therein.

Fig. 3 is a view on an enlarged scale of a roller included in Fig. 2,

Fig. 4 is an end elevation of the roller of Fig. 3,

Figs. 5 and 6 are views corresponding to Figs. 1 and 2 of another strop securing mechanism according to the invention, the section of Fig. 6 being taken on the line VI—VI in Fig. 5,

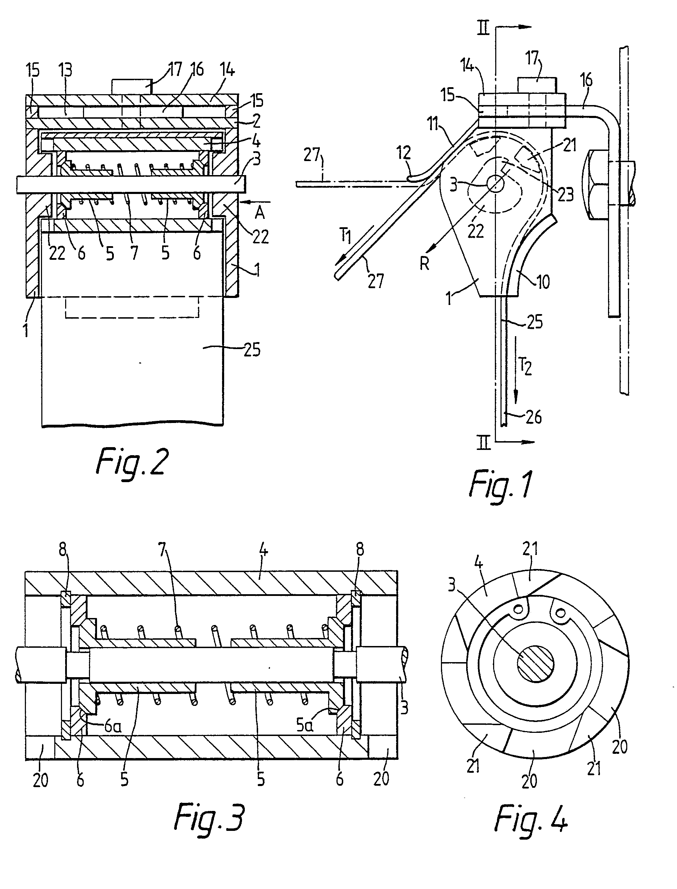

Referring to Figs. 1 and 2 of the drawings, a strop securing mechanism comprises a housing having two side plates 1, which are spaced apart and depend from the ends of a horizontal crossmember 2. The side plates carry a spindle 3 which supports a hollow roller 4, through the medium of bushes 5 and flat washers 6. As may be seen more clearly from Fig. 3, a pair of flanged bushes 5 is carried on the spindle 3 and urged apart by a coil spring 7 to engage flat washers 6 which fit inside the bore of the roller and are retained in place by circlips 8. The apertures of the washers 6 are chamfered at 45° on their respective inner surfaces 6a and the outer surfaces 5a of the flanges of the bushes are chamfered at a similar angle, the two sets of chamfers co-operating to maintain the roller concentric with the spindle.

The flat washers are inset from the ends of the roller and the end faces of the roller each have five circumferentially spaced openings 20 (Fig. 4) cut into them to define teeth 21 in such manner that the points of the teeth in both end faces extend in the same direction with respect to the outer surface of the roller, i.e. the teeth are 'handed'.

Bosses 22, formed on the inner surfaces of the side plates 1 in the regions surrounding the spindle 3, fit inside the ends of the roller and each is partly cut away to a cam shape having a projecting lobe 23 (shown dotted in Fig. 1), the two lobes are also handed so that both project in the same sense if they were to be viewed from, for instance, the direction of the arrow A in Fig. 2.

A curved support plate 10 extends between the side plates 1 of the housing towards the lower portion thereof and a guide plate 11 having a lip 12 extends between the side plates 1 at the upper portion of the housing opposite to the support plate 10 with respect to the spindle 3. A slot 13 defined by a plate 14 spaced above the crossmember 2 by end pieces 15 serves to receive one arm of a bracket 16 which is retained by a pin 17, the housing being thereby adapted for swivel-mounting on a structure such as a door pillar of a motor car.

A strop 25, which may be of webbing material, enters the housing over the inner surface of the curved support plate 10 before changing direction to pass around the roller 4 and emerge beneath the guideplate 11. The lower end 26 of the strop 25 is attached to an anchorage (not shown) which may be fixed or of the inertia locking type.

The outer end 27 of the strop 25 forms part of load restraining equipment such as a safety belt or harness for use by an occupant of a motor car. Normally the strop can move easily through the housing, the roller revolving freely to permit this, to facilitate the tying down of a load, or the assumption and adjustment of a belt or harness by a vehicle occupant.

The effect of acceleration on the load, as for instance due to impact, will be a considerable increase in tension (indicated by the arrows T1, T2 in Fig. 1) in the strop, and, since the strop is constrained around approximately 50% of the roller circumference by the support plate 10 and the guide plate 11, there will be a resultant force on the roller as indicated by the arrow R in Fig. 1. A resultant force of pre-determined magnitude will act through the chamfered surfaces of the flat washers 6 to displace the bushes 5 inwardly towards each other against the pressure of the spring 7, and the roller 4 will become dislodged with respect to the bushes and the spindle 3.

The cam lobes 23 will enter appropriate slots 20 in the roller (according to the rotation thereof) and adjacent teeth 21 will engage with the cams, thus acting to support the roller in a new position. In this position, the roller will bear on the strop so as to press it against the surface of the support plate 10, the strop being thus secured from further movement, which effect is enhanced by friction acting on that part of the strop surface which extends around the roller to the lip of the guide plate 11. Roughening of the surface of the roller, as by knurling, will assist in this respect.

A high coefficient of friction between the roller and the strop will also ensure an extended stress gradient in the strop, thereby reducing the possibility of the strop parting under the loads imposed.

Should the roller become unnecessarily dislodged, it can be readily pushed back into its normal position, concentric with spindle 3 by, for instance, finger pressure applied in a direction opposite to that in which the resultant force R will act.

Where the mechanism is used with a car safety belt the outer end 27 of the strop (or belt) 25 should desirably extend substantially horizontally as shown in dotted lines in Fig. 1 to pass over the wearer's shoulder, the lip 12 acting to ensure that the strop is gently guided into its desired alignment. For the smooth passage of a safety belt through the mechanism the angle of the mounting bracket 16 can be important, since the axis of the swivel pin 17 should pass through the belt anchorage point (or the exit point of an inertia reel housing) and must lie along the belt centre-line at this point. Thus different cars will need differing shapes of bracket.

Too small a roller diameter is likely to give rise to excessive friction which would hinder free movement of a belt wearer, leading in turn to possible discomfort.

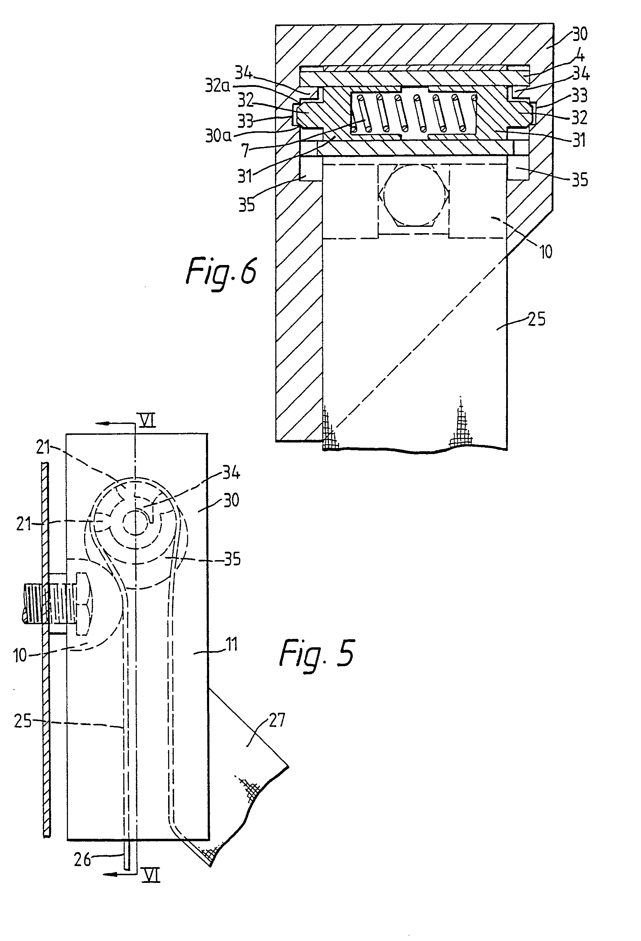

In the embodiment of Figs. 5 and 6, the same reference numerals indicate corresponding integers to those aforementioned.

A strop 25 having one end 26 attached to an anchorage (not shown) is deflected by a support member 10, disposed within a housing 30 to pass around a roller 4 and over a guide 11 before its outer end 27 emerges to form part of a load restraining equipment. The lower part of the housing 30 and the guide 11 are angled to change the direction of the outer end 27 of the strop as it emerges.

The roller 4 is supported on a pair of bushes 31 urged apart by a coil spring 7 and each having a pintle 32 at its outer end. The pintles 32 are concentric with the roller 4 and have chamfered ends 32a which engage holes 33 in the housing 30 to form journals 30a for the roller. The ends of the roller are cut away to form teeth 21 as before, but the teeth themselves are substantially symmetrical in cross-section. Claw members 34 formed internally of the housing 30 extend into the circular channels defined between the roller and the pintles 32, and circular recesses 35 are cut out of the inner surfaces of the housing excentrically with respect to the holes 33.

When tension in the strop exceeds a desired value, the resultant force on the roller will act to disengage the pintles 32 from the holes 33 and the roller assembly will drop into the recesses 35 with the claw members 34 entering appropriate slots between the teeth 21. The strop will thus become trapped between the roller 4 and the support member 10.

Generally where a strop comprises a rope or cable the roller may advantageously be in the nature of a sheaved pulley though having teeth formed near its periphery as before for support purposes when in the displaced position. This arrangement is particularly suitable for use in a self-jamming cleat to assist in rope haulage in a sailing vessel. In this case it is preferable that the pulley be maintained in the freely rotating position until the jamming function is required when it may be displaced at will, as by a cam and lever or solenoid arrangement, so as to restrain movement of a rope in one direction to assist in such operations as shortening sail.

## Claims

1. Strop securing means including:
a fixed housing (1, 2, 10, 11);
a roller (4) contained within the housing (1, 2, 10, 11);
a location and displacement arrangements (5, 7) arranged for:
(i) locating the roller (4) in the housing (1, 2, 10, 11) in a first position in which the roller (4) is free to rotate and the strop (25) can pass freely over the roller (4); and
(ii) allowing the roller (4) to be displaced to a second position by the action of the strop (25) against the roller (4) when the strop (25) is subject to a tension thereby causing the strop (25) in the second position to be pressed between the roller (4) and a part of the housing (10);
characterised in that the roller (4) is hollow and is supported within the housing (1, 2, 10, 11) by two pairs of co-operating surfaces (5a, 6a, 30a, 32a) each pair comprising at least one surface (6a, 32a) coaxial with the roller and at least one surface (5a, 6a, 32a) of each pair being a chamfer, said surfaces being maintained in engagement when the roller is in the first position by spring loading, and has openings (20) at the ends of its wall and the housing (1, 2, 10, 11) has integral projections (22, 23) extending into the ends of the roller (4) and adapted to interlock with the openings (20) in the roller (4) to secure the roller (4) against rotation in the second position thereby causing the strop (25) to be trapped between the roller (4) and a part of the housing (10).

2. Strop securing means as claimed in claim 1 and further characterised in that the location and displacement arrangement (5, 7) comprises bushes (5) urged apart by a spring (7) which when the strop (25) is in a first condition, in which the tension in the strop (25) is below a pre-determined finite level, is in a non-compressed state and the roller (4) is coaxially mounted on the bushes (5), the ends of the bushes (5) serving to locate the roller (4) relative to the housing (1, 2, 10, 11) in the said first position and which spring (7), with the strop (25) in a second condition, in which the tension reaches the predetermined level, is in a compressed state by the action of the strop (25) on the bushes (5) through the roller (4), compressing the spring (7), the bushes (5) being moved together thereby releasing the roller (4) to allow it to be displaced from the first position to the second position.

3. Strop securing means as claimed in claim 2 and further characterised in that the bushes (5) are flanged, the bushes (5) and the spring (7) being carried on a spindle (3) which is fixed to the housing (1), the roller (4) being coaxial with the bushes (5) when the roller (4) is in the first position, the flanges of the bushes (5) co-operating with flat washers (6) located in the hollow region of the roller (4) the apertures of which washers (6) are chamfered on their respective inner surfaces and the flanges of the bushes (5) are chamfered, the two sets of chamfers co-operating to maintain the roller (4) coaxial with the spindle (3) when the roller (4) is in the first position and the pre-determined finite tension level acting through the chamfers to release the roller (4) from the first position when the pre-determined finite tension level is reached thereby releasing the roller (4) from the first position.

4. Strop securing means as claimed in claim 2 and further characterised that the bushes (31) are provided with pintles (32), the roller (4) being coaxial with the bushes (31), the pintles (32) acting against slots (33) in the housing (30) to maintain the roller (4) in the first position until the predetermined finite tension level is reached, the pintles (32) being disengageable from their slots (33) in the housing (30) when the predetermined finite tension level is reached so that the roller (4) may be released from the first position.

5. Strop securing means as claimed in claim 4 and further characterised in that the pintles (32) are chamfered.

6. Strop securing means as claimed in claim 1 and further characterised in that the projections (22, 23) comprise bosses (22) integral with the housing (1), each boss (22) having a lobe (23) shaped to enter an opening (20) in the periphery of the roller (4).

7. Strop securing means as claimed in claim 1 and further characterised in that the projections (34) comprises claw members (34) integral with the housing (30).

8. Strop securing means as claimed in any one preceding claim and further characterised in that the roller (4) has a roughened surface.

9. Strop securing means as claimed in any one preceding claim and further characterised in that the housing (1, 2, 10, 11) is provided with strop guide means (10, 11) for the purpose of guide a strop (25) round the roller.

10. Strop securing means as claimed in any one preceding claim in combination with a strop (25) which extends round at least 50% of the circumference of the roller (4).

11. Strop securing means as claimed in any one preceding claim in combination with a strop (25) which extends between a load and an anchorage, passing through the housing (1, 2, 10, 11) and round the roller (4) of the strop securing means.

12. Strop securing means as claimed in any one preceding claim in combination with a strop (25) which is connected to a safety belt or harness to be work by an occupant of a vehicle.

**Revendications**

1. Dispositif d'immobilisation d'une lanière, comportant:
un boîtier fixe (1, 2, 10, 11);
un rouleau (4) contenu dans ce boîtier (1, 2, 10, 11);
un agencement (5, 7) de maintien en place et de déplacement destiné à:
(i) maintenir le rouleau (4) dans le boîtier (1, 2, 10, 11) dans une première position dans laquelle ce rouleau (4) peut tourner librement et la lanière (25) peut passer librement sur ce rouleau (4); et,
(ii) permettre au rouleau (4) d'être amené à une seconde position par l'action que la lanière (25) exerce sur lui lorsqu'elle est soumise à une tension, de sorte que, dans cette seconde position, cette lanière (25) soit comprimée entre ce rouleau (4) et un élément (10) du boîtier.
dispositif caractérisé en ce que le rouleau (4) est creux et est soutenu dans le boîtier (1, 2, 10, 11) par deux paires de surfaces coopérantes (5a, 6a; 30a, 32a), chacune de ces paires comprenant au moins une surface (6a; 32a) coaxiale à ce rouleau et au moins une surface (5a, 6a; 32a) qui est un chanfrein, ces surfaces étant maintenues en contact par la poussée d'un ressort lorsque le rouleau occupe sa première position, ce rouleau comportant des encoches (20) aux extrémités de sa paroi et le boîtier (1, 2, 10, 11) comportant des protubérances (22, 23) qui en font partie intégrante, pénètrent dans les extrémités du rouleau (4) et sont destinées à s'emboîter dans les encoches (20) de ce rouleau (4) de manière à l'empêcher de tourner dans sa seconde position, ce qui fait que la lanière (25) est emprisonnée entre ledit rouleau (4) et un élément (10) du boîtier.

2. Dispositif d'immobilisation d'une lanière selon la revendication 1, caractérisé encore en ce que l'agencement (5, 7) de maintien en place et de déplacement comprend des manchons (5) écartés l'un de l'autre par un ressort (7) qui, lorsque la lanière (25) est dans un premier état dans lequel sa tension est inférieure à une valeur finie prédéterminée, n'est pas comprimé, le rouleau (4) étant alors monté coaxialement sur ces manchons (5) et les extrémités de ces derniers servant à le maintenir dans la première position par rapport au boîtier (1, 2, 10, 11), et qui, lorsque la lanière (25) est dans un second état, dans lequel sa tension atteint la valeur prédéterminée, est comprimé par l'action de cette lanière (25) sur les manchons (5) par l'intermédiaire du rouleau (4), action qui comprime ce ressort (7), les manchons (5) étant rapprochés en libérant ce rouleau (4) de manière à lui permettre de passer de sa première position à la seconde.

3. Dispositif d'immobilisation d'une lanière selon la revendication 2, caractérisé en ce que les manchons (5) comportent des collerettes et sont montés, avec le ressort, sur une tige (3) qui est fixée au boîtier (1), le rouleau (4) étant coaxial à ces manchons (5) lorsqu'il occupe sa première position, les collerettes desdits manchons (5) coopérant avec des rondelles planes (6) qui sont logées dans la partie creuse du rouleau (4) et dont les ouvertures sont chanfreinées sur la face intérieure respective de ces rondelles, ces collerettes des manchons (5) étant chanfreinées, les deux jeux de chanfreins coopérant de manière à maintenir le rouleau (4) coaxial à la tige (3) quand ce rouleau (4) occupe sa première position et la tension à la valeur finie prédéterminée agissant par l'intermédiaire de ces chanfreins de manière à libérer ce rouleau (4) de cette première position lorsque cette tension a cette valeur prédéterminée, ce qui dégage le rouleau de ladite première position.

4. Dispositif d'immobilisation dune lanière selon la revendication 2, caractérisé en ce que les manchons (31) comportent des pivots (32), le rouleau (4) étant coaxial à ces manchons (31), les pivots (32) agissant contre des trous (33) du boîtier (30) de manière à maintenir ce rouleau (4) dans sa première position jusqu'à ce que la tension atteigne la valeur finie prédéterminé, ces pivots (32) pouvant être dégagés de leurs trous (33) du boîtier (30) quand la tension a atteint cette valeur finie prédéterminée, si bien que le rouleau (4) peut être libéré de sa première position.

5. Dispositif d'immobilisation d'une lanière selon la revendication 4, caractérisé en ce que les pivots (32) sont chanfreinés.

6. Dispositif d'immobilisation d'une lanière selon la revendication 1, caractérisé en ce que les protubérances (22, 23) sont des bossages (22) qui font corps avec le boîtier (1), chacun de ces bossages (22) comportant un lobe (23) conformé de manière à pénétrer dans une encoche (20) de la périphérie du rouleau (4).

7. Dispositif d'immobilisation d'une lanière selon la revendication 1, caractérisé en ce que les protubérances (34) comprennent des griffes (34) qui font partie intégrante du boîtier (30).

8. Dispositif d'immobilisation d'une lanière selon l'une quelconque des revendications précédentes, caractérisé en ce que la surface du rouleau (4) est rugueuse.

9. Dispositif d'immobilisation d'une lanière selon l'une quelconque des revendications précédentes, caractérisé en ce que le boîtier (1, 2, 10, 11) comporte des éléments (10, 11) de guidage de la lanière destinés à faire passer cette lanière (25) autour du rouleau.

10. Dispositif d'immobilisation d'une lanière selon l'une quelconque des revendications précédentes, en combinaison avec une lanière (25) qui entoure le rouleau (4) sur au moins 50% de sa circonférence.

11. Dispositif d'immobilisation d'une lanière selon l'une quelconque des revendications précédentes, en combinaison avec une lanière (25) qui va d'une charge à un ancrage en passant dans le boîtier (1, 2, 10, 11) et autour du rouleau (4) de ce dispositif d'immobilisation.

12. Dispositif d'immobilisation d'une lanière selon l'une quelconque des revendications précédentes, en combinaison avec une lanière (25) qui est reliée à une ceinture de sécurité, ou harnais, destinée à être utilisée par un occupant d'un véhicule.

**Patentansprüche**

1. Gurtsicherungseinrichtung mit
— einem feststehenden Gehäuse (1, 2, 10, 11),
— einer im Gehäuse (1, 2, 10, 11) enthaltenen Walze (4),
— Festlegungs- und Verschiebungsanordnungen (5, 7), die angeordnet sind zum:
(i) Festlegen der Walze (4) im Gehäuse (1, 2, 10, 11) in einer ersten Stellung, in der die Walze (4) frei drehbar ist und der Gurt (25) sich frei über die Walze (4) bewegen kann, und
(ii) Ermöglichen einer Verschiebung der Walze (4) in eine zweite Stellung durch die Wirkung des Gurts (25) gegen die Walze (4), wenn der Gurt (25) einem Zug ausgesetzt ist, wodurch der Gurt (25) in der zweiten Stellung zwischen der Walze (4) und einem Teil des Gehäuses (10) zusammengedrückt wird, dadurch gekennzeichnet, daß die Walze (4) hohl und im Gehäuse (1, 2, 10, 11) durch zwei Paare von zusammenwirkenden Oberflächen (5a, 6a, 30a, 32a) gelagert ist, wobei jedes Paar wenigstens eine zur Walze koaxiale Oberfläche (6a, 32a) aufweist und wenigstens eine Oberfläche (5a, 6a, 32) jedes Paars eine Abschrägung ist, wobei diese Oberflächen durch Federbelastung in Eingriff gehalten werden, wenn sich die Walze in der ersten Stellung befindet, und daß die Walze an den Enden ihrer Wand Öffnungen (20) aufweist und daß das Gehäuse (1, 2, 10, 11) einstückig ausgebildete Vorsprünge (22, 23) aufweist, die sich in die Enden der Walze (4) erstrekken und mit den Öffnungen (20) in der Walze (4) in Eingriff kommen können, um die Walze (4) in der zweiten Stellung gegen Drehung zu sichern, wodurch der Gurt (25) zwischen der Walze (4) und einem Teil des Gehäuses (10) eingefangen ist.

2. Gurtsicherungseinrichtung nach Anspruch 1, dadurch gekennzeichnet, daß die Festlegungs- und Verschiebungsanordnung (5, 7) Buchsen (5) aufweist, die durch eine Feder (7) auseinandergedrückt werden, die sich in einem nicht zusammengedrückten Zustand befindet, wenn sich der Gurt (25) in einer ersten Stellung befindet, in der die Spannung im Gurt (25) unter einem vorgegebenen begrenzten Niveau liegt, daß die Walze (4) koaxial auf den Buchsen (5) gelagert ist, wobei die Enden der Buchsen (5) zum Festlegen der Walze (4) gegenüber dem Gehäuse (1, 2, 10, 11) in der ersten Stellung dienen, und daß die Feder (7) mit dem Gurt (25) in einer zweiten Stellung, in der die Spannung das vorgegebene Niveau erreicht, sich in einem zusammengedrückten Zustand befindet durch die Wirkung des Gurts (25) auf die Buchsen (5) über die Walze (4) unter Zusammendrückung der Feder (7), wobei die Buchsen (5) zusammengedrückt werden, wodurch die Walze (4) freigegeben wird, um ihr ein Verschieben von der ersten Stellung in die zweite Stellung zu ermöglichen.

3. Gurtsicherungseinrichtung nach Anspruch 2, dadurch gekennzeichnet, daß die Buchsen (5) mit Flanschen versehen sind, wobei die Buchsen (5) und die Feder (7) auf einer am Gehäuse (1) befestigten Spindel (3) gelagert sind, wobei die Walze (4) koaxial zu den Buchsen (5) ist, wenn sich die Walze (4) in der ersten Stellung befindet, wobei die Flansche der Buchsen mit flachen Scheiben (6) zusammenarbeiten, die im hohlen Bereich der Walze (4) angeordnet sind, wobei die Öffnung der Scheiben (6) an ihren jeweiligen Innenflächen und die Flansche der Buchsen abgeschrägt sind, wobei die beiden Sätze von Abschrägungen zusammenarbeiten, um die Walze (4) koaxial zur Spindel (3) zu halten, wenn sich die Walze (4) in der ersten Stellung befindet, und wobei die Spannung mit dem vorgegebenen begrenzten Niveau über die Abschrägungen wirkt, um die Walze (4) aus der ersten Stellung freizugeben, wenn das vorgegebene begrenzte Spannungsniveau erreicht ist, wodurch die Walze (4) aus der ersten Stellung freigegeben wird.

4. Gurtsicherungseinrichtung nach Anspruch 2, dadurch gekennzeichnet, daß die Buchsen (31) mit Zapfen (32) versehen sind, wobei die Walze koaxial zu den Buchsen (31) ist, wobei die Zapfen (32) gegen Einschnitte (33) im Gehäuse (30) wirken, um die Walze (4) in der ersten Stellung zu halten, bis das vorgegebene begrenzte Spannungsniveau erreicht ist, wobei die Zapfen (32) mit ihren Einschnitten (33) im Gehäuse (30) außer Eingriff gebracht werden können, wenn das vorgegebene begrenzte Spannungsniveau erreicht ist, so daß die Walze (4) aus der ersten Stellung freigegeben werden kann.

5. Gurtsicherungseinrichtung nach Anspruch 4, dadurch gekennzeichnet, daß die Zapfen (32) abgeschrägt sind.

6. Gurtsicherungseinrichtung nach Anspruch 1, dadurch gekennzeichnet, daß die Vorsprünge (22, 23) mit dem Gehäuse (1) einstückig ausgebildete Erhöhungen (22) aufweisen, wobei jede Erhöhung (22) einen Nocken (23) aufweist, der so geformt ist, daß er in eine Öffnung (20) am Umfang der Walze (4) eindringt.

7. Gurtsicherungseinrichtung nach Anspruch 1, dadurch gekennzeichnet, daß die Vorsprünge (34) mit dem Gehäuse (30) einstückig ausgebildete Backen (34) aufweisen.

8. Gurtsicherungseinrichtung nach einem der vorhergehenden Ansprüche, dadurch gekennzeichnet, daß die Walze (4) eine aufgerauhte Oberfläche hat.

9. Gurtsicherungseinrichtung nach einem der vorhergehenden Ansprüche, dadurch gekennzeichnet, daß das Gehäuse (1, 2, 10, 11) mit einer Gurtführung (10, 11) versehen ist zum Führen eines Gurts (25) um die Walze.

10. Gurtsicherungseinrichtung nach einem der vorhergehenden Ansprüche, in Kombination mit einem Gurt (25), der sich um wenigstens 50% des Umfangs der Walze (4) erstreckt.

11. Gurtsicherungseinrichtung nach einem der vorhergehenden Ansprüche, in Kombination mit einem Gurt (25), der sich beim Durchgang durch das Gehäuse (1, 2, 10, 11) und um die Walze (4) der Gurtsicherungseinrichtung zwischen einer Last und einer Verankerung erstreckt.

12. Gurtsicherungseinrichtung nach einem der vorhergehenden Ansprüche, in Kombination mit einem Gurt (25), der mit einem von einem Fahrzeuginsassen getragenen Sicherheitsgurt oder -geschirr verbunden ist.

Fig.2

Fig. 1

Fig.3

Fig. 4

1

*Fig.6*

*Fig. 5*